# EUROPÄISCHE PATENTANMELDUNG

(11) **EP 1 508 602 A1**
(43) Veröffentlichungstag der Anmeldung: **23.02.2005**
(21) Anmeldenummer: 04018434.3
(22) Anmeldetag: 04.08.2004
(51) Int. Cl.: C09J 133/06

(54) **Montagekleber auf Basis einer wässrigen Polymer-Dispersion**

(30) Priorität: 20.08.2003 DE 10338858
(71) Anmelder: BASF Aktiengesellschaft, 67056 Ludwigshafen (DE)
(72) Erfinder: Centner, Alexander, Dr., 67127 Rödersheim-Gronau (DE); Flick, Dieter, 67459 Böhl-Iggelheim (DE); Wichmann, Christina, 67165 Waldsee (DE)

(57) **Zusammenfassung**

Die vorliegende Erfindung betrifft einen Klebstoff, enthaltend wenigstens ein Copolymer ausgewählt aus der Gruppe der ethylenisch ungesättigten Mono- oder Dicarbonsäuren, deren Anhydriden, ihrer Esterderivate oder Gemischen davon sowie mindestens ein Verdickungsmittel und weitere übliche Hilfsstoffe. Weiterhin betrifft die vorliegende Erfindung die Herstellung dieses Klebstoffes sowie dessen Verwendung als Montagekleber.

## Beschreibung

Die vorliegende Erfindung betrifft einen Klebstoff, enthaltend wenigstens ein Copolymer ausgewählt aus der Gruppe der ethylenisch ungesättigten Mono- oder Dicarbonsäuren, deren Anhydriden, ihrer Esterderivate oder Gemischen davon sowie mindestens ein Verdickungsmittel und weitere übliche Hilfsstoffe. Weiterhin betrifft die vorliegende Erfindung die Herstellung dieses Klebstoffes sowie dessen Verwendung als Montagekleber.

Montagekleber, auch Konstruktionsklebstoffe genannt, sind Zusammensetzungen, die sich aufgrund ihrer Eigenschaften zur vielfältigen Montage, vor allem in der Bauindustrie eignen. Aber auch zum Verkleben von Bauteilen wie z.B. im Fahrzeug-, Flugzeug und Bootsbau oder bei der Herstellung von Möbeln werden Montageklebstoffe immer häufiger eingesetzt. Sie zeigen eine sehr hohe Anfangshaftung bei einer letztlich guten Belastbarkeit der Verklebung von Holz, Metall, Keramik, PVC und weiteren Kunststoffen im Innen- und Außenbereich, aber auch besondere Fähigkeiten bezüglich Spaltüberbrückung, Haftungsspektrum und Flexibilität.

Eine Anwendung von Montageklebern ist das schnelle und dauerhafte Befestigen von Gegenständen an Decken, Wänden und Böden. Häufig werden Montageklebstoffe auch bei der Verlegung von Holzböden (z.B. Parkett) für Reparaturarbeiten, sowie zur Fixierung bei der Teppich-, PVC-, oder Linoleumverlegung sowohl im Boden als auch im Wandbereich eingesetzt. In der Regel lassen sich die Montageklebstoffe aufgrund ihrer günstigen Eigenschaften auch als Dichtstoff einsetzen. Bei Montageklebern kommt es darauf an, einerseits Zähigkeit und Standfestigkeit und andererseits günstige Fließeigenschaften zu erreichen. Besonders wünschenswert ist die schnelle und einfache Montage schwerer Gegenstände, ohne dass eine zusätzliche Fixierung notwendig ist. Zudem muss die Klebmasse in der Lage sein, Materialunebenheiten zu überbrücken (Spaltüberbrückung).

Die maximale Anfangshaftung der bisher auf dem Markt verfügbaren bekannten Montagekleber übersteigt keine 30 gcm⁻². Bei der Fixierung grösserer, formstabiler Gegenstände, z.B. Deckenplatten treten daher Probleme auf. Weitere Montageprobleme gibt es bei der Montage von Gegenständen, die unter Spannung stehen, wie beispielsweise gebogene Fußleisten und Sockelleisten. Diese Gegenstände müssen zusätzlich fixiert werden, bis die Klebmasse ausgehärtet ist.

Es werden grundsätzlich vier Arten von Montageklebern unterschieden:
a) lösemittelhaltige Systeme
b) reaktive Systeme
c) Schmelzklebstoffe (Hotmelts)
d) wasserbasierte Systeme.

Lösemittelhaltige Kleber sind besonders bei großflächigen Verklebungen im Innenbereich unbeliebt, da es häufig zu Geruchsbelästigungen durch freiwerdende Lösemitteldämpfe kommt. Die Vorteile liegen bei der Verwendung von lösemittelhaltigen Systemen darin, dass das vorhandene Lösemittel schnell aus der Klebmasse entweichen kann und so relativ schnell eine hohe Haftung für Montagearbeiten erzielt werden kann.

Reaktive Systeme und Hotmelts benötigen zur Verarbeitung entweder Spezialbedingungen/-geräte oder sie brauchen eine relativ lange Zeit, um genügende Haftungseigenschaften für Montagearbeiten zu entwickeln.

Wasserbasierte Systeme haben den Nachteil, das vorhandene Wasser nur langsam abzugeben. Der Aushärtungsvorgang der Klebmasse ist daher relativ langsam. Der große Vorteil der wasserbasierten Systeme liegt darin, dass keine Geruchsbelästigungen oder/und Gesundheitsgefährdungen durch freigesetzte Lösemittel auftreten. Allerdings gab es bisher keine Montagekleber mit Haftungswerten > 30 gcm⁻².

GB 2 061 990 beschreibt einen Klebstoff zum Fixieren von Keramik-Fliesen, enthaltend
- 2 bis 50 Gew.-% einer wässrigen Dispersion oder Lösung eines organischen Polymeren mit einem Feststoff-Anteil von 30 bis 70 %,
- 40 bis 80 Gew.-% eines anorganischen Füllstoffes,
- 0,5 bis 15 Gew.-% eines organischen Additivs und
- 0 bis 10 Gew.-% an Hilfsstoffen.

In den Beispielen werden Klebstoffe aus folgenden Komponenten hergestellt:
- 100 Gew.-Teile Styrol/Acrylat Copolymer in Form einer Dispersion mit 45 % Feststoffanteil
- 450 Gew.-Teile Sand mit unterschiedlichen Korngrössen,
- 5 Gew.-Teile eines Koaleszenz-Lösemittels auf der Basis eines aromatischen Glykol-Ethers,
- 1 bis 2 Gew.-Teile an Celluloseether mit einer Viskosität von 15 000 als Verdickungsmittel,
- 2 bis 1 Teile an Aerosil und
- 50 bis 55 Gew.-Teile an Wasser.

Als organische Verdickungsmittel werden neben Celluloseether auch Polyacrylate genannt. Mit diesem Klebstoff sollen Keramik-Fliesen auf dem Boden fixiert werden.

Nachteilig an dem beschriebenen Klebstoff ist, dass seine Anfangshaftung noch zu gering ist, um schwere Gegenstände, z.B. Ziegel an Wänden, sofort nach dem Egalisieren des Klebstoffs zu fixieren.

WO 01/74961 offenbart einen Montageklebstoff auf der Basis einer wässrigen Styrol/Acrylat-Dispersion.

Beim extremen Verdicken von Acrylatdispersionen mit hohen Konzentrationen an Acrylatverdickern zum Erreichen einer hohen Anfangshaftung (insbesondere über die Viskosität) wurden in der Vergangenheit lediglich sehr hochviskose Klebmassen erhalten, die sich schlecht verarbeiten ließen, nicht lagerstabil waren und ein schlechtes Benetzungsverhalten an den zu verklebenden Substraten zeigten.

Aufgabe der vorliegenden Erfindung war die Entwicklung eines lagerstabilen Klebstoffes mit hoher Anfangshaftung zum Fixieren schwerer Gegenstände und leichter Anwendung. Der Klebstoff sollte eine bessere Haftung auf schwachsaugenden Untergründen aufweisen und eine höhere Filmdehnung besitzen.

Die Aufgabe wurde erfindungsgemäß gelöst durch einen Klebstoff enthaltend
(A) 10-98 Gew.-% einer wässrigen Polymerdispersion enthaltend wenigstens ein Monomer, ausgewählt aus der Gruppe der ethylenisch ungesättigten Mono- oder Dicarbonsäuren, deren Anhydriden, ihrer Esterderivate oder Gemischen davon,
(B) 1-10 Gew.-% mindestens eines Verdickungsmittels
(C) 0-90 Gew.-% an Füllstoffen
(D) 0-5 Gew.-% an Pigmenten
(E) 0-10 Gew.-% an Hilfsstoffen
(F) 0-40 Gew.-% an Weichmachern
(G) Wasser sowie
(H) Tackifier

Der erfindungsgemäße Klebstoff zeichnet sich durch eine bessere Verarbeitbarkeit, gute Ausspritzbarkeit und eine verlängerte offene Zeit aus.

Weiterer Gegenstand der Erfindung ist ein Verfahren zur Herstellung des Klebstoffes dessen Verwendung als Montagekleber, sowie dessen Verwendung auf schwachsaugenden Untergründen.

Der erfindungsgemäße Klebstoff enthält eine wässrige Polymerdispersion A), die zu 10-98 Gew.-% enthaltend wenigstens ein Monomer, ausgewählt aus der Gruppe der ethylenisch ungesättigten Mono- oder Dicarbonsäuren, deren Anhydriden, ihrer Esterderivate oder Gemischen davon, aufgebaut ist (im folgenden Monomere a) genannt).

Unter den Monomeren a) versteht man u.a. Vinylester von 1 bis 3 C-Atomen aufweisenden Alkancarbonsäuren, Ester der Acrylsäure oder Methacrylsäre mit 1 bis 12 C-Atomen aufweisenden Alkoholen, sowie 1 bis 12 C-Atome aufweisende monoethylenisch ungesättigte Dicarbonsäuren, deren Amid- oder Esterderivate, Halbester der Dicarbonsäuren, deren Anhydride oder Gemische davon. Dabei können die Säuren auch in Form ihrer Neutralisierungsprodukte, sowie deren Natrium- oder Kaliumsalze, eingesetzt werden.

Die Alkylgruppe der Acrylate kann linear, verzweigt oder cyclisch und gegebenenfalls substituiert sein.

Unter den 1 bis 12 C-Atomen aufweisenden Alkylgruppen versteht man beispielsweise die Methyl-, Ethyl-, Isopropyl-, Butyl-, Dodecyl, Cyclohexyl-, 2-Ethylhexyl-, oder die 2-Hydroxyethylgruppe.

Die Acrylsäureester können auch reaktive Gruppen für eine spätere Nachvernetzung enthalten, beispielsweise Silan-Gruppen. Die Si_{(Alk)3}-Gruppe kann direkt oder über einen (CH₂)ₙ-Rest mit der Vinylgruppe verbunden sein. Dabei kann n eine Zahl von 2 bis 6 sein, vorzugsweise 1 oder 2.

Neben den Monomeren a) kann das Polymerisat noch 0 bis 95 Gew.-% Monomere b) enthalten.

Als Monomere b) können beispielsweise Vinylester von Carbonsäuren mit 1-20 C-Atomen wie z.B. Vinylformiat, Vinylacetat, Vinylpropionat, Vinyllaurat und Vinylester stark verzweigter, gesättigter Monocarbonsäuren mit C₉-C₁₁-Seitenketten (Versatic-Säuren), Maleinsäureester (jeweils mit 1 bis 12, vorzugsweise 2 bis 8 C-Atomen in der Alkoholkomponente), Ethylen, ethylenisch ungesättigte Nitrile wie Acrylnitril und Methacrylnitril. Vinyl- und Vinylidenhalogenide z.B. Vinylchlorid und Vinylidenchlorid, Vinylether C₂-C₈-Monoolefine, nicht aromatische Kohlenwasserstoffe mit mindestens 2 konjugierten Doppelbindungen (Butadien, Isopren, Chloropren), C₁-C₁₀-Hydroxyalkyl(meth)acrylate, N-Vinylamide, N-Vinyllactame, Amide α,β-ethylenisch ungesättigter Monocarbonsäuren. Besonders geeignete Monomere sind Acrylsäure, Methacrylsäure, Methyl(meth)acrylat, Ethyl(meth)acrylat, n-Butyl(meth)acrylat, iso-Butyl(meth)acrylat, tert.-Butyl(meth)acrylat, 2-Ethylhexylacrylat, Hydroxyethylacrylat, Hydroxyethylmethylacrylat, Hydroxypropylacrylat sowie Hydroxybutylacrylat. Besonders bevorzugt sind n-Butylacrylat und Methylmethacrylat.

Die Monomere können einzeln oder in Mischungen eingesetzt werden.

Es können zwei- oder mehrfach ethylenisch ungesättigte Monomere verwendet werden, die bei der Polymerisation zu einer Vernetzung führen z.B. die Diester zweiwertiger Alkohole mit α,β-monoethylenisch ungesättigten Monocarbonsäuren wie Propandiolbisacrylat sowie die entsprechenden Methacrylate.

Bei der Polymerisation können außerdem Regler eingesetzt werden. Geeignete Regler sind z.B. Verbindungen mit einer Thiolgruppe wie tert.-Butylmercaptan, Mercaptoethan, Mercaptopropyltrimethoxysilan.

Die erfindungsgemäß zu verwendenden wässrigen Polymerisatdispersionen umfassen Ausführungsformen, deren in disperser Verteilung befindliches Polymerisat 10- 98 Gew.-%, vorzugsweise 20 bis 85 Gew.-%, insbesondere 30 bis 70 Gew.-% (die Werte beziehen sich auf die flüssige Dispersion) ethylenisch ungesättigte Mono- oder Dicarbonsäuren, deren Anhydride, ihre Esterderivate oder Gemische davon enthält.

Die Copolymerisate können nach üblichen Polymerisationsverfahren als Substanzpolymerisation, Lösungspolymerisation und bei schlechter Löslichkeit der Monomere auch als Emulsions-, Dispersions- oder Suspensionspolymerisation hergestellt werden. Ebenfalls ist es möglich, bei hinreichend schlechter Löslichkeit des Polymerisats im Reaktionsgemisch die Polymerisation als Fällungspolymerisation durchzuführen.

Bei den genannten Polymerisationsverfahren wird bevorzugt unter Ausschluss von Sauerstoff, vorzugsweise in einem Stickstoffstrom gearbeitet. Für alle Polymerisationsmethoden werden die üblichen Apparaturen verwendet, z. B. Rührkessel, Rührkesselkaskaden, Autoklaven, Rohrreaktoren und Kneter. Bevorzugt sind die Methoden der Lösungs- und Emulsionspolymerisation. Erfolgt die Herstellung der erfindungsgemäßen Polymerisate durch radikalische, wässrige Emulsionspolymerisation, empfiehlt es sich, dem Reaktionsmedium Tenside oder Schutzkolloide zuzusetzen. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S. 411 ff.

Bevorzugt liegen die Polymerisate in Form einer wässrigen Dispersion oder Lösung mit Feststoffgehalten von vorzugsweise 30 bis 75 Gew.-%, insbesondere von 40 bis 65 Gew.-% vor.

Neben der saatfreien Herstellungsweise kann zur Einstellung einer definierten Teilchengröße die Emulsionspolymerisation nach dem Saatlatex-Verfahren oder in Gegenwart von in situ hergestelltem Saatlatex erfolgen. Verfahren hierzu sind dem Fachmann bekannt und können dem Stand der Technik entnommen werden.

Die erfindungsgemäßen Polymerisate eignen sich hervorragend als Zusatzmittel für Klebstoffe, insbesondere Montagekleber.

Sie zeichnen sich durch eine verbesserte Anfangshaftung für die Fixierung von Gegenständen, die sich durch schwachsaugende Oberflächen auszeichnen, wie z.B. einen Säurestein, aus.

Bei den Verdickungsmitteln handelt es sich in der Regel um hochmolekulare Stoffe, die entweder Wasser aufsaugen und dabei aufquellen oder intermolekulare Gitterstrukturen bilden. Die organischen Verdickungsmittel gehen schließlich in eine zähflüssige echte oder kolloidale Lösung über.

Das organische Verdickungsmittel enthält ein wässriges System eines Copolymeren auf der Basis von mindestens Acrylsäure und Acrylamid, vorzugsweise emulgiert in einer Ölfraktion, insbesondere in einer Erdölfraktion. Der Feststoffgehalt des Systems beträgt 20 bis 40, insbesondere 24 bis 28 % gemäß DIN 53189 bzw. ISO 1625. Insbesonders bevorzugt verwendet man Collacral®C (BASF AG). Die verdickende Wirkung von Collacral®C wird vor allem im alkalischen Bereich, bei einem pH-Wert von 7 bis 10 erreicht.

Verwendet werden können aber auch weitere Verdicker auf Basis von Acrylsäure und Acrylamid (z.B. Collacral® HP), carboxlygruppenhaltige Acrylsäureester Copolymere wie Latekoll® D, PU-Verdicker (z.B. Collacral® PU 75, Collacral® LR 8989, Collacral® LR 8990, Collacral® PU 85, Polyacrylamid), Cellulosen und deren Derivate sowie natürliche Verdicker, wie z.B. Bentonite, Alginate oder Stärke.

Zur Herstellung emissionsarmer Produkte, die häufig in Innenanwendungen gefordert werden, können auch pulverförmige Verdicker z.B. auf Acrylatbasis (z.B. Collacral® DS 6254) eingesetzt werden.

Die Verdicker werden in wässriger Form in Mengen von 1 -10 Gew.-%, bevorzugt 1,5-5 Gew.-% eingesetzt, in Pulverform können Mengen von 0,1 - 10 Gew.-% eingesetzt werden.

Als Füllstoffe werden übliche Füllstoffe, beispielsweise gefällte oder natürliche Kreide-Typen Omyacarb® der Fa. Omya verwendet. Sie dienen dazu, den Schwund zu reduzieren und die Konsistenz zu beeinflussen.

Als weitere anorganische Füllstoffpartikel eignen sich beispielsweise Füllstoffpartikel aus Andalusit, Silimanit, Kyanit, Mullit, Pyrophylit, Omogolit oder Allophan. Weiterhin geeignet sind Verbindungen auf der Basis von Natriumaluminaten, Silikate, wie z.B. Aluminiumsilikate, Calciumsilikate oder Kieselsäuren (z.B. Aerosil®) als Thixotropierungsmittel. Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer Löslichen Sulfate, wie Gips, Anhydrit oder Schwerspat, sowie Calciummineralien, wie Calcit.

Die genannten anorganischen Materialien können einzeln aber auch im Gemisch eingesetzt werden. Weitere geeignete Materialien sind gefälltes oder natürliches Kaolin, Talkum, Magnesium- oder Aluminuimhydroxid (zur Einstellung der Brandklasse), Zinkoxid sowie Zirkoniumsalze. Mittels Zugabe von Leichtfüllstoffen - keramischen Mikrohohlkugeln , Glashohlkugeln, Schaumglaskugeln oder sonstigen Leichtfüllstoffen, wie sie z.B. von der Fa. Omega-Minerals hergestellt werden, lassen sich Parameter wie Dimensionsstabilität und Dichte beeinflussen.

Die Füllstoffpartikel weisen einen x50-Wert für die durchschnittliche Teilchengrößenverteilung von etwa 1 bis 120 µm, beispielsweise etwa 3 bis 60 oder etwa 60 bis 90 µm auf, gemessen mit Sympatec Helos H 0720 in Isopropanol.

Ebenfalls zum Einsatz geeignet sind organische Füllstoffpartikel, die sich nicht ohne weiteres zu den wasserlöslichen oder wasserdispergierbaren Polymeren einordnen lassen. Hierzu zählen insbesondere feinvermahlene Kunstoffmehle, wie sie beim Recycling von Kunststoffen anfallen können und Kunststoffmehle, wie sie aus der Feinvermahlung von hochvernetzten elastomeren oder duromeren Polymeren erhältlich sind. Ein Beispiel hierfür ist Gummimehl, wie es beispielsweise durch Feinvermahlung von Autoreifen entsteht. Weitere Füllstoffpartikel sind Kunststofffasern, Schlagzähmodifikatoren, Cellulosefasern, Glasfasern (z.B. Wollastonit Marken)

Die Pigmente dienen dazu, den Klebstoff, bzw. Montageklebstoff einzufärben. Bevorzugt sind organische Pigmente und Eisenoxide. Beispiele sind die Luconyl-Typen der Fa. BASF. Die Pigmente werden in Mengen von 0 bis 5 Gew.-%, bevorzugt 0,5 bis 2 Gew.-% eingesetzt.

Als Weichmacher werden beispielsweise in einer Menge von 0 bis 40 Gew.-%. Propylenglykolalkylphenylether, Ethylenglykolphenylether, Polyisobutylene, Phthalsäureester und/oder Sulfonsäureester, Benzolsulfonamid, Harzschmelzen (mit natürlichen und synthetische Harze) mit Pluriolen oder Weichmachern, Phosphatester, Di-2-ethylhexylsebacate (DOS) und Di-2-ethylhexylazelate (DOZ), Diisodecylsebacate (DIDS), Tris-2-ethylhexyltrimellitate (Trioctyltrimellitate - TOTM), L79TM (ein Ester von gemischten halb-linearen C₇- und C₉- Alkoholen) und L810TM, ein Ester von gemischten C8 und C10 linearen Alkoholen, oder epoxidiertes Sojabohnenöl (ESBO) sowie epoxidiertes Leinsamenöl (ELO) eingesetzt. Bevorzugt wird jedoch auf die Verwendung von Weichmachern verzichtet.

Weiterhin können Fettalkohole oder deren Derivate eingesetzt werden, insbesondere Triglyceride von höheren Fettsäuren und vorzugsweise natürliche Fette und Öle.

Eingesetzt werden können Phthalate (Palatinol Typen), Adipate (Plastomoll Typen), Dicarboxylate (z.B. Hexamoll DINCH), Citrate oder Weichharze (z.B. acResin® DS 3500, Acronal® 4 F).

Zu den weiteren Hilfsstoffen gehören beispielsweise Konservierungsmittel zur Vermeidung von Pilz- und Bakterienbefall, Lösungsmittel zur Beeinflussung der offenen Zeit und der mechanischen Eigenschaften, z.B. Butylglykol, Dispergierhilfen zur Verbesserung des Benetzungsverhaltens, z.B. Pigmentverteiler NL (BASF AG). Emulgatoren (Emulphor® OPS 25, Lutensol® TO 89), Frostschutzmittel (Ethylenglycol, Propylenglycol). Als Tackifier können kolophonium- oder kohlenwasserstoffbasierte Harze eingesetzt werden. Weitere Hilfsstoffe können sein, Vemetzer, Haftvermittler (Acrylsäure, Silane, Aziridine) oder Entschäumer (Lumiten Marken). Die restliche Komponente zu 100 Gew.-% ist Wasser.

Der pH-Wert des Klebstoffes liegt in der Regel oberhalb von 7, vorzugsweise im Bereich von 7 bis 10. In diesem pH-Bereich ist der Verdickungseffekt mit den eingesetzten Verdickungsmitteln am günstigsten. Bei pH-Werten grösser als 10 wird eine Zersetzung der eingesetzten Acrylatverdicker beobachtet, die Verdickungswirkung lässt stark nach und bei pH-Werten kleiner als 7 nimmt die Verdickungswirkung der eingesetzten Verdickungsmittel ebenfalls deutlich ab.

Die hohe Anfangshaftung des Montageklebstoffes beruht im wesentlichen auf der besonderen Rheologie im Ruhezustand. Im Ruhezustand ist der Montageklebstoff praktisch formstabil. Bei der mechanischen Verarbeitung hingegen nimmt die Viskosität ab, so dass sich die Klebmasse gut rühren und verarbeiten lässt. Unter Einwirkung von Scherwirkung nimmt die Viskosität ab. Daher lässt sich die Klebmasse z.B. sehr gut aus einer Kartusche ausdrücken. Sobald die Scherkräfte nicht mehr auf die Klebmasse einwirken, erreicht die Klebmasse wieder ihre ursprüngliche Viskosität. Ein zeitverzögerter Viskositätsaufbau ist praktisch nicht zu beobachten.

Der erfindungsgemäße Montageklebstoff wird im allgemeinen folgendermaßen hergestellt. Die Dispersion wird vorgelegt. Der pH-Wert der Dispersion sollte in einem Bereich um 7,5 bis 8,5 liegen und muss gegebenenfalls mit Natronlauge bzw. Ammoniak angepasst werden.

Das Dispergiermittel und der Emulgator werden zunächst zu der Dispersion hinzugegeben. Anschliessend wird die Mischung ca. 10 Minuten im Planetenmischer, Horizontaler Turbulent Mischer (Fa. Drais), Planetendissolver bzw. Dissolver (Fa. PC Laborsysteme) gemischt. Nach der Zugabe des Thixotropierungsmittels wird gut homogenisiert und dann wird ein wässriges System des Verdickers, z.B. auf der Basis von Acrylsäure und Acrylamid zugesetzt und das Rühren für weitere 10 Minuten fortgeführt. Nachdem der Ansatz homogen ist, wird für ca. 5 bis 10 Minuten ein Vakuum von ca. 10 mbar angelegt.

Die Anwendung des Klebstoffes ist ohne Spezialgeräte für jedermann leicht möglich. Der erfindungsgemäße Montageklebstoff kann in Kartuschen, Folienbeutel, Eimer, Tuben oder Druckbehälter gemäß TRG 300 verpackt werden.

Der aufgetragene Klebstoff lässt sich wegen seiner cremigen Konsistenz leicht egalisieren.

Er kann zum Kleben, Beschichten, Dichten und Füllen verwendet werden, insbesondere zum Verkleben auf nichtsaugenden Untergründen, z.B. auf Holz, Keramik, Glas, Zement, Metall und Kunststoffen. Seine Schichtdicke kann bis zu 30 mm, insbesondere 1 bis 20 mm betragen.

Die nachfolgenden Beispiele sollen die Erfindung näher erläutern, ohne sie jedoch darauf zu beschränken.

### Beispiele

### Herstellung des Montageklebstoffes

Die Dispersion wird vorgelegt. Der pH-Wert der Dispersion sollte in einem Bereich um 7,5 - 8,5 liegen. Gegebenenfalls muß der pH-Wert mit einer Natronlauge bzw. Ammoniak angepasst werden. Das Dispergiermittel und der Emulgator wird zugegeben. Die Mischung wird ca. 10 Minuten im Planetenmischer/Planetendissolver/Dissolver gemischt. Anschließend wird der Füllstoff und das Thixotropierungsmittel hinzugefügt und gut homogenisiert. Nun wird der Verdicker zugegeben und ebenfalls gut eingerührt. Als letzter Einsatzstoff kommt das Wasser hinzu (kann auch vor dem Verdicker zugegeben werden). Nachdem der Ansatz homogen ist, wird für ca. 5 - 10 Minuten evakuiert. Zum Schluß wird der Montagekleber in Kartuschen/Folienbeutel/Eimer abgefüllt.

Aus den folgenden Komponenten wurden wie oben beschrieben die Montageklebstoffe hersgestellt:

### Beispiel 1:

- 631 Teile wässrige Dispersion eines Copolymers aus Butylacrylat/Methylmethacrylat (Acronal® A 509 (BASF AG))
- 13 Teile Pigmentverteiler NL (BASF)
- 6,5 Teile Lutensol® TO 89 (BASF)
- 290,5 Teile Omyacarb® 5 GU (Omya)
- 19,5 Teile Aerosil® 300 (Degussa)
- 20 Teile Collacral® C (BASF)
- 19,5 Teile Wasser

### Beispiel 2

- 631 Teile wässrige Dispersion eines Copolymers aus Acryl- und Methacrylsäureestern (Acronal® DS 6254 (BASF AG))
- 13 Teile Pigmentverteiler NL (BASF)
- 6,5 Teile Lutensol® TO 89 (BASF)
- 290,5 Teile Omyacarb® 5 GU (Omya)
- 19,5 Teile Aerosil® 300 (Degussa)
- 20 Teile Collacral® C (BASF)
- 19,5 Teile Wasser

### Beispiel 3

- 63,1 Teile Acronal® A 509
- 1,3 Teile Pigmentverteiler NL
- 0,65 Teile Lutensol® TO 89
- 3,5 Teile Wasser
- 29,05 Teile Omyacarb® 5 GU
- 0,8 Teile Collacral® DS 6256
- 1,57 Teile Aerosil® 300

### Beispiel 4

- 63,1 Teile Acronal® A 509
- 1,3 Teile Pigmentverteiler NL
- 0,65 Teile Lutensol® TO 89
- 1 Teil Collacral® PU 85
- 30,05 Teile Omyacarb® 5 GU
- 5 Teile Aerosil® 300

### Beispiel 5

- 63,1 Teile Acronal® A 509
- 1,3 Teile Pigmentverteiler NL
- 0,65 Teile Lutensol® TO 89
- 1 Teil Collacral® PU 85
- 29,05 Teile Omyacarb® 5 GU
- 4,5 Teile Aerosil® 300
- 4,14 Teile Wasser

### Prüfmethoden

### Bestimmung der Ausspritzbarkeit

### Geräte:

Pneumatische Spritzpistole mit perforierter Verschußplatte, Lochdurchmesser 4 mm, Stoppuhr, Druckluftzufuhr mit Ventil, Manometer zur Aufrechterhaltung eines konstanten Druckes von 0,8 bar während des Prüfvorganges und mit einem entsprechenden Anschlussstück für die Spritzpistole.

### Durchführung:

Die zu prüfende Dichtungsmasse wird blasenfrei in die Spritzpistole eingefüllt. Anschließend wird die gefüllte Spritzpistole bei geschlossenem Schieber unter Druck von 0,8 bar gesetzt und während der gesamten Prüfung konstant unter diesem Druck gehalten. Vor Beginn der Messung werden 2 cm des Dichtstoffes ausgespritzt. Es werden mindestens 3 Bestimmungen durchgeführt.

### Auswertung:

Die Ausspritzmenge wird in g/Minute angegeben.

### Substrate:

Buchenholz, Abmessungen 60 x 40 x 5 mm

### Verklebungsfläche:

Buchenholz/Buchenholz 20 x 40 mm

### Klebstoffauftrag:

Mit Zahnleiste Pajarito F/A1

### Belastung:

24 Stunden mit 500 g

### Prüfkörperlagerung:

-14 Tage bei Normklima 23°C/50 % rel. Feuchte

### Verfahrensweise:

Der Klebstoff wird mit der Zahnleiste auf das Substrat aufgetragen. Das beschichtete Substrat wird mit einem unbeschichteten Substrat derart verklebt, dass eine Verklebungsbreite von 20 mm entsteht und an beiden Enden ein Überstand von 40 mm zum Einklemmen in die Prüfmaschine vorhanden ist. Anschließend wird die Prüffläche für 24 Stunden mit einem 500 g Gewicht belastet. Die Prüfung erfolgt nach 14 Tagen Lagerung bei 23°C/50 % rel. Luftfeuchte mit einer Prüfgeschwindigkeit von 100 mm/min.

### Auswertung:

Mittelwert aus 3 Prüfkörpern in N/mm²
Bruchbildbeurteilung

### Bestimmung der Scherfestigkeiten

Der Klebstoff wird mit der Zahnleiste auf das Substrat aufgetragen. Das beschichtete Substrat wird mit dem unbeschichteten Substrat derart verklebt, daß eine Verklebungsbreite von 20mm entsteht und an beiden Enden ein Überstand von 40mm zum Einklemmen in die Spannbacken der Prüfmaschine frei bleibt. Diese Verklebung wird sofort mit einem 500g Gewicht für 24 Stunden belastet. Nach 2 Wochen 23°C/50% rel. Luftfeuchte erfolgt die Scherung in einer Zugprüfmaschine mit einer Prüfgeschwindigkeit von 100 mm/min.
Es werden mindestens 3 Prüfkörper getestet. Das Ergebnis wird aus dem Mittelwert der 3 Einzelprüfungen berechnet und in N/mm² angegeben.

### Anfangshaftung mit einem nichtsaugenden Stein:

### Material:

Fulgoplanplatte (320 x 420 x 20 mm)

Klinkerstein, säurefest (240 x 115 x 65 mm), vollständig durchgesintert, Wasseraufnahmefähigkeit 3 % (Prüfung nach DIN 51056, Abschnitt 5.2 Kochversuch), mit scharfen Kanten und ebenen Flächen, allseitig rechtswinkelig, ohne Risse und Blasen, gleichmäßig dick und nicht verzogen, Fabrikat: Steuler oder Keramchemie, Farbe Hell, Zahnleiste: Pajarito Typ E (6 mm)

Der Klebstoff wird auf den Stein aufgebracht und mit der Zahnleiste zur Rutschrichtung hin langsam abgezogen. Nun wird der Stein auf die noch waagerechtliegende Fulgoplanplatte angedrückt. Die Platte wird aufrecht stehend fixiert. Am oberen Rand wird jeweils rechts und links eine Markierung angezeichnet. Optische Beurteilung erfolgt nach 1 Tag Lagerung bei 23°C/50 % rel. Luftfeuchtigkeit.

### Bestimmung der offenen Zeit

Der Kleber wird auf eine Faserzement- bzw. Buchenholzplatte aufgetragen. Nach je 5, 10, 15, 20, 25 und 30 Minuten Ablüftzeit wird die zweite Platte mit einer Belastung von 5s 500 g verklebt. Anschließend wird der Prüfkörper (ohne zusätzliches Gewicht) an das Nordtestprüfgerät gehängt. Beurteilt wird die Haftung der beiden Platten in Minuten.

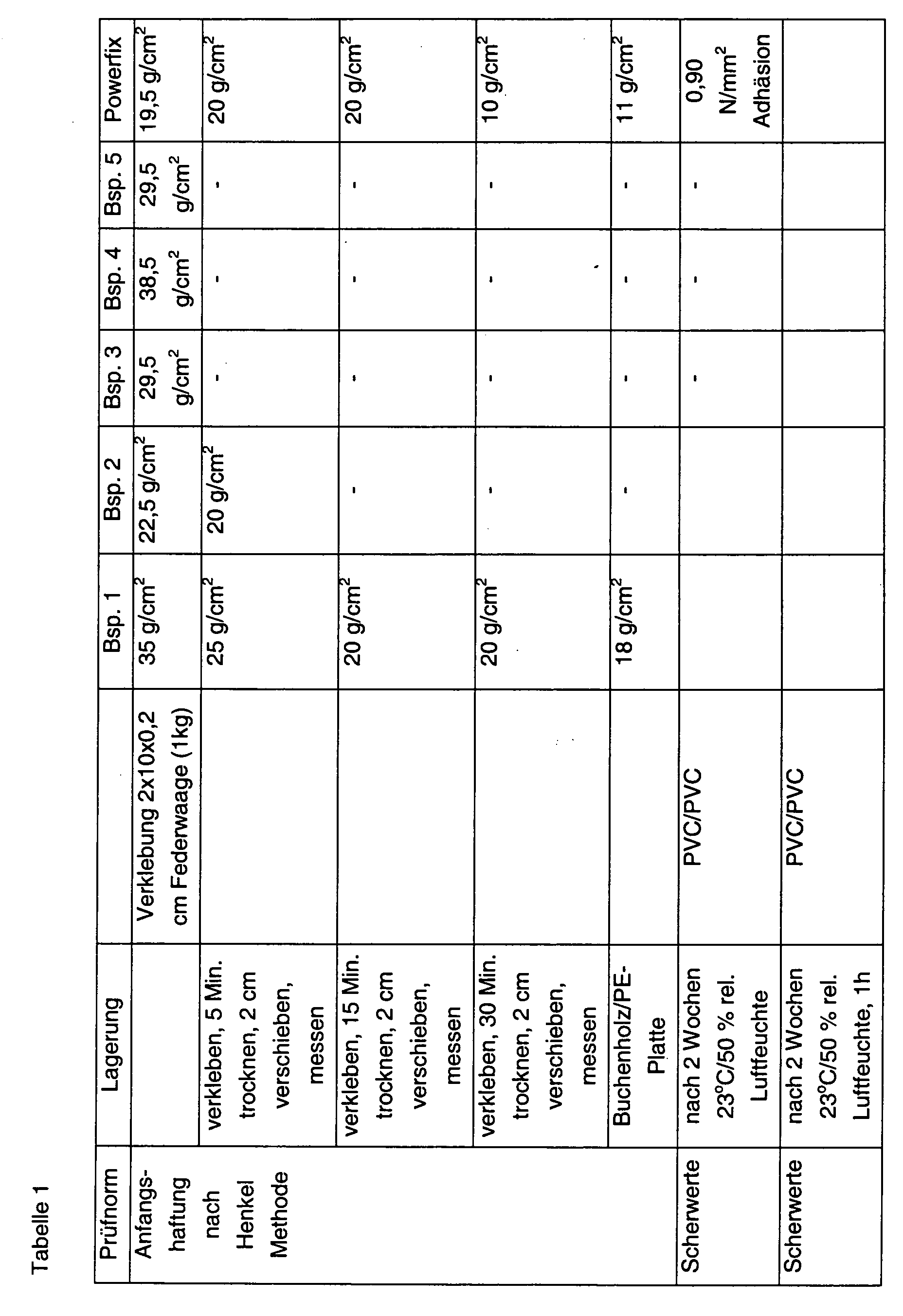

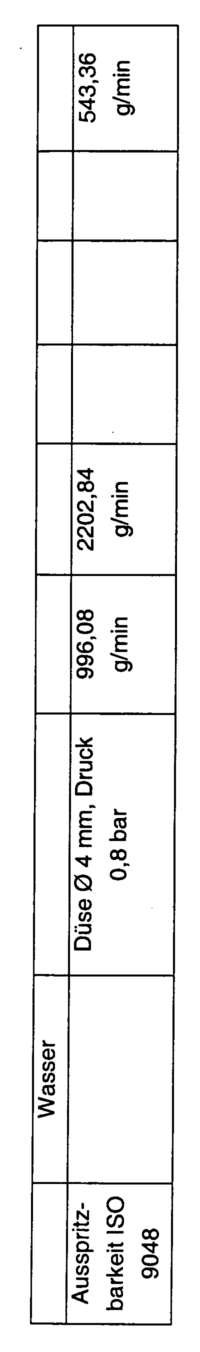

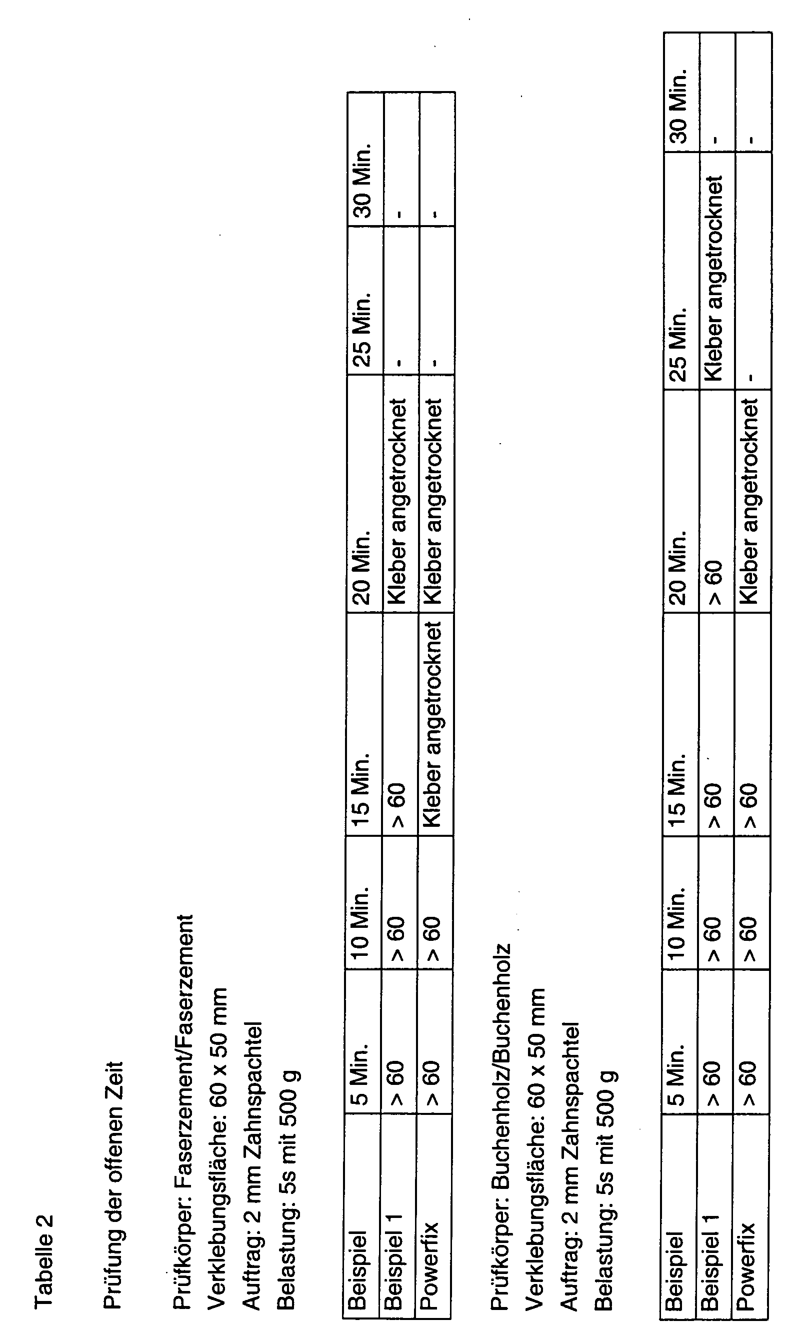

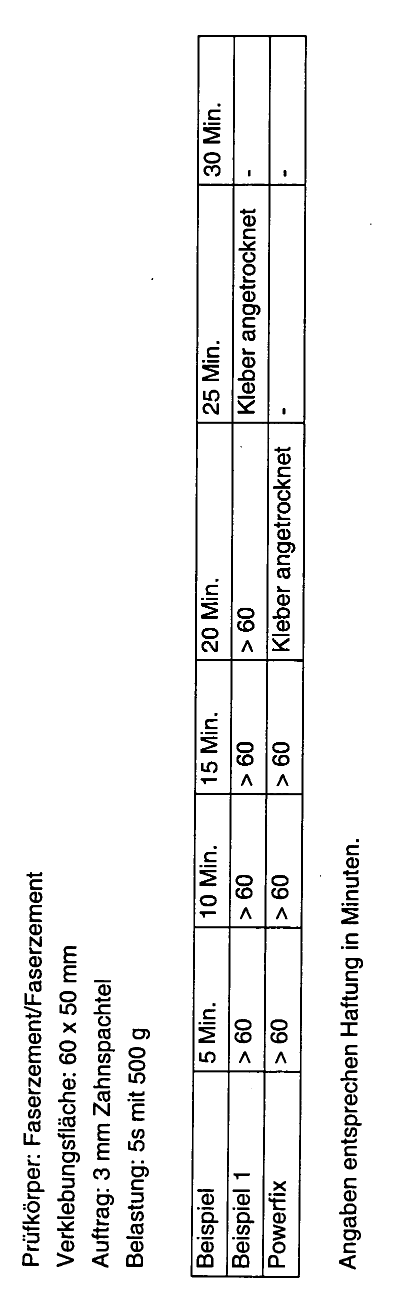

## Patentansprüche

1. Klebstoff enthaltend
(A) 10-98 Gew.-% einer wässrigen Polymerdispersion enthaltend wenigstens ein Copolymer, ausgewählt aus der Gruppe der ethylenisch ungesättigten Mono- oder Dicarbonsäuren, deren Anhydriden, ihrer Esterderivate oder Gemischen davon,
(B) 1-10 Gew.-% mindestens eines Verdickungsmittels
(C) 0-90 Gew.-% an Füllstoffen
(D) 0-5 Gew.-% an Pigmenten
(E) 0-10 Gew.-% an Hilfsstoffen
(F) 0-40 Gew.-% an Weichmachern
(G) Wasser sowie
(H) Tackifier.

2. Klebstoff gemäß Anspruch 1, **dadurch gekennzeichnet, dass** als Komponente (A) 10 - 98 Gew.-% einer Acrylat-Dispersion eingesetzt werden.

3. Klebstoff gemäß Anspruch1 oder 2, enthaltend als Komponente (A) 10-98 Gew.-% einer wässrigen Butylacrylat/Methylmethacrylat Dispersion.

4. Klebstoff gemäß einem der Ansprüche 1 bis 3, enthaltend als Verdickungsmittel (B) eine wässrige Lösung eines Acrylsäure/Acrylamid Copolymers.

5. Klebstoff gemäß einem der Ansprüche 1 bis 4, **dadurch gekennzeichnet, dass** der pH-Wert größer 7 ist.

6. Verwendung des Klebstoffs gemäß einem der Ansprüche 1 bis 5 als Montageklebstoff.

7. Verwendung des Klebstoffs gemäß einem der Ansprüche 1 bis 6 als Montageklebstoff auf schwachsaugenden Untergründen.

8. Montageklebstoff enthaltend
(A) 10-98 Gew.-% einer wässrigen Polymerdispersion enthaltend wenigstens ein Copolymer, ausgewählt aus der Gruppe der ethylenisch ungesättigten Mono- oder Dicarbonsäuren, deren Anhydriden, ihrer Esterderivate oder Gemischen davon,
(B) 1-10 Gew.-% mindestens eines Verdickungsmittels
(C) 0-90 Gew.-% an Füllstoffen
(D) 0-5 Gew.-% an Pigmenten
(E) 0-10 Gew.-% an Hilfsstoffen
(F) 0-40 Gew.-% an Weichmachern
(G) Wasser sowie
(H) Tackifier

9. Montageklebstoff gemäß einem der Ansprüche 6 oder 7, **dadurch gekennzeichnet, dass** der pH-Wert größer 7 ist.
